# EUROPÄISCHE PATENTSCHRIFT

(11) **EP 2 784 988 B1**
(45) Veröffentlichungstag und Bekanntmachung des Hinweises auf die Patenterteilung: **09.12.2015**
(21) Anmeldenummer: 13161259.0
(22) Anmeldetag: 27.03.2013
(51) Int. Cl.: H04L 12/40, H04L 12/935, H04L 12/931

(54) **Kommunikationsschnittstellenmodul für ein modulares Steuerungsgerät eines industriellen Automatisierungssystems**
Communication interface module for a modular control device of an industrial automation system
Module d'interface de communication pour un dispositif de commande modulaire d'un système industriel d'automatisation

(43) Veröffentlichungstag der Anmeldung: 01.10.2014
(73) Patentinhaber: Siemens Aktiengesellschaft, 80333 München (DE)
(72) Erfinder: Kröher, Michael, 66976 Rodalben (DE); Grüneis, Petra, 90765 Fürth (DE); Schorpp, Elmar, 76744 Wörth-Maximiliansau (DE)

(56) Entgegenhaltungen:
- EP-A1- 1 906 601
- EP-A1- 2 362 585
- WO-A1-2006/136201

## Beschreibung

Ein industrielles Automatisierungssystem umfaßt üblicherweise eine Vielzahl von über ein industrielles Kommunikationsnetz miteinander vernetzten Automatisierungsgeräten und dient im Rahmen einer Fertigungs- oder Prozeßautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

In industriellen Automatisierungssystemen sind speicherprogrammierbare Steuerungen weit verbreitet. Eine speicherprogrammierbare Steuerung (SPS) ist ein Automatisierungsgerät, das zur Steuerung oder Regelung einer Anlage, Maschine oder eines Geräts vorgesehen ist und anhand eines Anwenderprogramms aus durch Sensoren erfaßten Eingangssignalen Ausgangssignale für Aktoren in Anlagen, Maschinen oder Geräten berechnet. Üblicherweise sind speicherprogrammierbare Steuerungen als modulare Steuerungsgeräte realisiert, die beispielsweise auf bestimmte Funktionen spezialisierte steckbare Baugruppen umfassen. Solche Baugruppen können beispielsweise Eingabe-/Ausgabe-Module, Kommunikationsschnittstellenmodule, Stromversorgungsmodule oder prozessorbasierte Zentraleinheiten sein. Eine prozessorbasierte Zentraleinheit ist ein zentrales Steuerungsmodul, in dem Anwendungsprogramme ablaufen, beispielsweise zur Berechnung von Stellgrößen für Aktoren aus durch Sensoren ermittelten Meßwerten.

Gesteuerte oder geregelte Anlagen, Maschinen oder Geräte sind vielfach über Feldbussysteme mit einem Eingabe-/Ausgabe-Modul eines modularen Steuerungsgeräts verbunden. Zunehmend werden hierfür Ethernet-basierte Kommunikationssysteme verwendet. Grundsätzlich können gesteuerte oder geregelte Anlagen, Maschinen oder Geräte auch über ein Kommunikationsschnittstellenmodul oder über die Zentraleinheit an ein modulares Steuerungsgerät angebunden sein. Das Kommunikationsschnittstellenmodul dient insbesondere zur Ankopplung eines modularen Steuerungsgeräts an ein industrielles Kommunikationsnetz, mit dem beispielsweise Steuerungs- und Überwachungseinheiten eines Leitsystems oder Datenverarbeitungsanlagen für Programmierungs-, Konfigurierungs- oder Projektierungsaufgaben verbunden sind. Zur Kopplung der Baugruppen eines modularen Steuerungsgeräts werden überwiegend Rückwandbussysteme verwendet, die eine Echtzeit-Kommunikation unterstützen.

Aus EP2362585A1 ist eine Signalverarbeitungseinheit in einem Kommunikationsmodul bekannt, bei der ein redundanter Verbindungspfad abhängig vom jeweiligen Status des Pfades gewählt wird.

Aus US 7 853 677 B2 ist ein Schnittstellenmodul für ein modulares Steuerungsgerät bekannt, bei dem das Schnittstellenmodul an ein Rückwandbussystem angekoppelt ist und als Kommunikations- bzw. Sicherheitsmodul Firewall-Funktionen umfaßt. Auf diese Weise kann ein Nachrichtenverkehr innerhalb eines industriellen Kommunikationsnetzes zwischen einer Datenverarbeitungsanlage und dem modularen Steuerungsgerät überwacht sowie unzulässige Nachrichten oder Datenzugriffe blockiert werden.

In DE 601 13 019 T2 ist ein Kommunikationssystem in einer modularen programmierbaren Steuerung beschrieben, die mehrere intelligente Module umfasst, die mit einer eigenen Bearbeitungseinheit ausgestattet sind. Außerdem ist ein interner Kommunikationsbus vorgesehen, über den Module der modularen programmierbaren Steuerung miteinander kommunizieren können.

Einem über den internen Kommunikationsbus entsprechend TCP/IP-Kommunikationsprotokoll kommunizierenden intelligenten Modul der modularen programmierbaren Steuerung sind eine eigene IP Adresse und ein TCP/IP-Protokollstapel zugeordnet, der durch eine Bearbeitungseinheit des intelligenten Moduls verarbeitet werden kann. Darüber hinaus umfaßt der interne Kommunikationsbus mehrere getrennte Kommunikationskanäle, die eine Übermittlung von Nachrichten entsprechend TCP/IP-Kommunikationsprotokoll neben einer Übermittlung von Nachrichten entsprechend einem anderen Kommunikationsprotokoll ermöglichen.

Aus US 8 230 115 B2 ist ein Kommunikationsadapter für ein modulares Steuerungsgerät beschrieben, der das modulare Steuerungsgerät redundant an ein industrielles Kommunikationsnetz anbindet. Der Kommunikationsadapter umfaßt eine erste und eine zweite Sende-/Empfangseinheit, die redundant jeweils an ein erstes bzw. zweites Teilnetz des industriellen Kommunikationsnetzes angeschlossen sind. Außerdem weist der Kommunikationsadapter eine Verbindungssteuerungseinheit sowie eine Schalteinheit auf. Ist das erste Teilnetz für den Kommunikationsadapter verfügbar bzw. in Betrieb, steuert die Verbindungssteuerungseinheit die Schalteinheit dazu an, eine aus dem ersten Teilnetz empfangene Nachricht auf eine resultierende Datenstruktur abzubilden. Falls das erste Teilnetz nicht verfügbar ist, veranlaßt die Verbindungssteuerungseinheit die Schalteinheit dazu, eine aus dem zweiten Teilnetz empfangene redundante Nachricht auf die resultierende Datenstruktur abzubilden. Darüber hinaus steuert die Verbindungssteuerungseinheit eine Weiterleitung einer zu sendenden Nachricht von der Schalteinheit an die erste Sende-/Empfangseinheit, wenn das erste Teilnetz in Betrieb ist. Bei Ausfall des ersten Teilnetzes veranlaßt die Verbindungssteuerungseinheit eine Weiterleitung einer zu sendenden Nachricht von der Schalteinheit an die zweite Sende-/Empfangseinheit. Nachteilig an dem in US 8 230 115 B2 beschriebenen Kommunikationsadapter sind beträchtliche Umschaltzeiten bei einem Teilnetzausfall oder einer Störung, die zu einem Nachrichtenverlust oder einer nicht rechtzeitigen Übermittlung führen.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie Media Redundancy Protocol, High-availability Seamless Redundancy oder Parallel Redundancy Protocol, für hochverfügbare, redundant betreibbare in industriellen Kommunikationsnetze entwickelt worden. Media Redundancy Protocol (MRP) ist im Standard IEC 62439 definiert und ermöglicht eine Kompensation einzelner Verbindungsausfälle in Netzen mit einfacher Ringtopologie bei stoßbehafteter redundanter Übertragung von Nachrichten. Entsprechend Media Redundancy Protocol ist einem Switch mit zwei Ports innerhalb der Ringtopologie ein Redundanz-Manager zugeordnet, der das Netzwerk auf Verbindungsausfälle überwacht und ggf. eine Schaltmaßnahme für einen Ringschluß einleitet. In normalen Betriebszustand prüft der Redundanz-Manager anhand von Test-Datenpaketen, ob innerhalb der Ringtopologie eine Unterbrechung aufgetreten ist. Datenpakete mit Nutzdaten leitet der dem Redundanz-Manager zugeordnet Switch normalerweise jedoch nicht von einem Port an den anderen Port weiter. Somit wird verhindert, daß Datenpakete mit Nutzdaten permanent innerhalb der Ringtopologie zirkulieren. Fällt innerhalb der Ringtopologie ein Switch oder eine Verbindung aus, werden von einem Port ausgesendeten Test-Datenpakete nicht mehr am jeweils anderen Port empfangen. Anhand dessen kann der Redundanz-Manager einen Ausfall erkennen und leitet bei einem Ausfall Datenpakete mit Nutzdaten im Unterschied zum normalen Betriebszustand von einem Port an den anderen Port und umgekehrt weiter. Darüber hinaus veranlaßt der Redundanz-Manager eine Benachrichtigung der übrigen Switches über eine Ausfall-bedingte Topologieänderung. Auf diese Weise wird vermieden, daß Datenpakete über die ausgefallene Verbindung übermittelt werden.

Stoßbehaftete Medienredundanzverfahren lassen sich grundsätzlich mit relativ geringem Aufwand realisieren. Nachteilig ist jedoch, daß einerseits Nachrichten im Fehlerfall verloren gehen können und andererseits während einer Rekonfiguration eines Kommunikationsnetzes zunächst ein Störungszustand vorliegt. Ein derartiger Störungszustand muß durch ein überlagertes Kommunikationsprotokoll, beispielsweise mittels TCP/IP auf Vermittlungs- bzw. Transportschichtebene, gesichert werden, um Datenverluste zu vermeiden.

Stoßbehaftete Medienredundanzverfahren erkennen Verbindungen in einem Kommunikationsnetz, die zu Schleifen führen, und sperren diese Verbindungen für Nachrichten mit Nutzdaten. Wenn sich eine Schleife durch einen Fehler auflöst, beispielsweise aufgrund eines Geräteausfalls oder einer Leitungsunterbrechung, heben stoßbehaftete Medienredundanzverfahren einer Sperrung einer Verbindung auf. Im Fehlerfall können hierdurch Nachrichten verloren gehen. Außerdem liegt während einer nicht vernachlässigbaren Rekonfigurationszeit bzw. während eines Umschaltstoßes ein gestörter Kommunikationszustand vor. Um Umschaltstöße zu vermeiden, werden Nachrichten bei stoßfreien Medienredundanzverfahren demgegenüber dupliziert und gleichzeitig über unabhängige Kommunikationspfade übertragen.

PROFINET (IEC 61158 Type 10) referenziert einerseits Media Redundancy Protocol als stoßbehaftetes Medienredundanzverfahren innerhalb eines Kommunikationsnetzes mit Ringtopologie. Als stoßfreies Medienredundanzverfahren kann auch Media Redundancy Planned Duplication (MRPD) verwendet werden, das gegenüber Media Redundancy Protocol eine Erweiterung für eine Übertragung von isochronen Echtzeitdaten darstellt. Bei Media Redundancy Planned Duplication handelt es sich jedoch nicht um ein anwendungsneutrales stoßfreies Medienredundanzverfahren, sondern um eine PROFINET-spezifische Erweiterung.

High-availability Seamless Redundancy (HSR) und Parallel Redundancy Protocol (PRP) sind im Standard IEC 62439-3 definiert und ermöglichen eine stoßfreie redundante Übertragung von Nachrichten. Entsprechend High-availability Seamless Redundancy und Parallel Redundancy Protocol wird jede Nachricht von einem sendenden Kommunikationsgerät dupliziert und auf zwei verschiedenen Wegen zu einem Empfänger geschickt. Durch ein empfängerseitiges Kommunikationsgerät werden Duplikate darstellende redundante Nachrichten aus einem empfangenen Datenstrom ausgefiltert.

In einem redundanten HSR- oder PRP-Kommunikationsnetz kann eine Netzkomponente, die einen Zugriff auf das redundante Kommunikationsnetz bereitstellt, unterschiedliche Rollen annehmen. Eine solche Netzkomponente, die Telegramme zwischen Teilnehmern oder Endgeräten in einem HSR- oder PRP-Kommunikationsnetz einerseits und Endgeräten bzw. Netzsegmenten ohne HSR/PRP-Funktionalität andererseits vermittelt, wird als HSR/PRP-Proxy oder RedBox bezeichnet. Grundsätzlich kann eine Netzkomponente für einen Zugriff auf ein redundantes HSR- oder PRP-Kommunikationsnetz mehrere HSR-Ringe verbinden oder Kommunikation zwischen HSR- und PRP-Netzsegmenten umsetzen. In diesem Fall wird die Netzkomponente als HSR-HSR-Koppler oder QuadBox bzw. HSR-PRP-Koppler bezeichnet.

Der vorliegenden Erfindung liegt die Aufgabe zugrunde, Kommunikationsschnittstellenmodul für ein modulares Steuerungsgerät eines industriellen Automatisierungssystems zu schaffen, das eine verlust- und verzögerungsarme Nachrichtenübermittlung in einem industriellen Kommunikationsnetz ermöglicht.

Diese Aufgabe wird erfindungsgemäß durch ein Kommunikationsschnittstellenmodul mit den in Anspruch 1 angegebenen Merkmalen gelöst. Vorteilhafte Weiterbildungen des erfindungsgemäßen Kommunikationsschnittstellenmoduls sind in den abhängigen Ansprüchen angegeben.

Das erfindungsgemäße Kommunikationsschnittstellenmodul für ein modulares Steuerungsgerät eines industriellen Automatisierungssystems umfaßt einen Anschluß für ein Rückwandbussystem des modularen Steuerungsgeräts. Dabei ist das Kommunikationsschnittstellenmodul über das Rückwandbussystem mit einer Zentraleinheit des modularen Steuerungsgeräts verbindbar. Das Rückwandbussystem kann auch zur Kommunikation mit anderen Modulen als der Zentraleinheit ausgestaltet und eingerichtet sein, beispielsweise zum Datenaustausch mit einem Eingabe-/Ausgabe-Modul. Insbesondere kann das Rückwandbussystem mechanische Verbindungselemente zur lösbaren Befestigung von Modulen eines modularen Steuerungsgeräts umfassen, beispielsweise eine Schiene und korrespondierende Fixierungselemente.

Darüber hinaus umfaßt das erfindungsgemäße Kommunikationsschnittstellenmodul eine erste und eine zweite Sende- und Empfangseinheit, die jeweils eine Schnittstelle für eine Netzverbindung eines redundanten Teilnetzes aufweisen. Dabei weisen beide Sende- und Empfangseinheiten eine identische Netzadresse und einen identischen Geräteidentifikator auf. Die erste und die zweite Sende- und Empfangseinheit sind vorzugsweise mittels eines Ethernet-PHY-Halbleiterbauelements realisiert. Außerdem ist ein mit der ersten und zweiten Sende- und Empfangseinheit verbundenes Koppelelement vorgesehen, über das der Anschluß für das Rückwandbussystem mit der ersten und zweiten Sende- und Empfangseinheit verbindbar ist. Mit dem Koppelelement ist eine Signalverarbeitungseinheit verbunden, die eine Multiplexereinheit zur parallelen Weiterleitung zu sendender Nachrichten an beide Sendeeinheiten und eine Redundanzbehandlungseinheit zur Verarbeitung von beiden Empfangseinheiten empfangener Nachrichten aufweist. Dabei umfaßt die Redundanzbehandlungseinheit eine Filtereinheit, die für eine Detektion empfangener redundanter Nachrichten eingerichtet ist. Die Signalverarbeitungseinheit ist vorzugsweise mittels eines Field Programmable Gate Arrays realisiert bzw. in ein Ethernet-MAC-Halbleiterbauelement integriert. Insgesamt ermöglicht das erfindungsgemäße Kommunikationsschnittstellenmodul eine ressourceneffiziente Lösung zur redundanten stoßfreien Kopplung eines modularen Steuerungsgeräts an ein industrielles Kommunikationsnetz.

Entsprechend einer besonders vorteilhaften Weiterbildung der vorliegenden Erfindung ist das Kommunikationsschnittstellenmodul über das Rückwandbussystem zur Bildung eines sicherheitsgerichteten Kommunikationsschnittstellensystems mit einem im wesentlichen identischen Kommunikationsschnittstellenmoduls verbunden. Hieraus resultiert eine nochmals erhöhte Ausfallsicherheit.

Vorteilhafterweise sind das Koppelelement und die Signalverarbeitungseinheit mit einer Prozessoreinheit verbunden, die für eine Bereitstellung von Kommunikations- bzw. Sicherheitsfunktionen auf Schicht 2 bis 7 entsprechend OSI-Referenzmodell (Open Systems Interconnection) ausgestalt und eingerichtet ist. Auf diese Weise können auch Dienste wie FTP, HTTP oder SNMP durch ein Kommunikationsschnittstellenmodul verfügbar gemacht werden. Darüber hinaus kann das Koppelelement ein MII-Bussystem (Media Independant Interface) entsprechend IEEE 802.3u umfassen, und der Anschluß für das Rückwandbussystem ist vorzugsweise über die Prozessoreinheit mit dem Koppelelement verbunden. Dies ermöglicht eine besonders einfache Integration von Redundanzfunktionen in ein Kommunikationsschnittstellenmodul.

Darüber hinaus kann entsprechend einer weiteren Ausgestaltung der vorliegenden Erfindung mittels der Prozessoreinheit ein Sicherungssystem zur Überwachung eines Nachrichtenverkehrs zwischen den redundanten Teilnetzen einerseits und dem Rückwandbussystem andererseits realisiert sein. Vorzugsweise sind dabei in einer der Prozessoreinheit zugeordneten Speichereinheit Regeln zur Überwachung des Nachrichtenverkehrs zwischen den redundanten Teilnetzen und dem Rückwandbussystem gespeichert, wobei die Regeln durch einen autorisierten Benutzer änderbar sind. Dies ermöglicht eine anwendungsindividuelle Anpassung von Schutzfunktionen für ein modulares Steuerungsgerät eines industriellen Automatisierungssystems.

Entsprechend einer bevorzugten Weiterbildung des erfindungsgemäßen Kommunikationsschnittstellenmoduls ist durch die Prozessoreinheit eine Protokollumsetzereinheit gebildet, die zur Umwandlung von Nachrichten entsprechend einem Parallel- oder Ringredundanz-Protokoll in Nachrichten entsprechend einem Rückwandbus-Protokoll ausgestaltet und eingerichtet ist. Somit können sämtliche Redundanzfunktionen in ein Kommunikationsschnittstellenmodul integriert werden. Zueinander redundante Nachrichten sind vorzugsweise durch eine einheitliche Sequenznummer gekennzeichnet. Dabei ist der Signalverarbeitungseinheit vorteilhafterweise eine Speichereinheit zugeordnet, die für eine Speicherung von Sequenznummern bereits fehlerfrei empfangener Nachrichten ausgestaltet und eingerichtet. Darüber hinaus ist die Redundanzbehandlungseinheit vorzugsweise für eine Überprüfung auf eine bereits gespeicherte Sequenznummer bei Empfang einer neuen Nachricht ausgestaltet und eingerichtet. Dies ermöglicht eine besonders zuverlässige, schnelle Identifizierung und Behandlung redundant empfangener Nachrichten.

Die Signalverarbeitungseinheit ist entsprechend einer weiteren Ausgestaltung der vorliegenden Erfindung sowohl für eine stoßbehaftete Nachrichtenübermittlung entsprechend einem Medienredundanz-Protokoll als auch für eine stoßfreie Nachrichtenübermittlung entsprechend einem Parallel- oder Ringredundanz-Protokoll innerhalb eines industriellen Kommunikationsnetzes ausgestaltet und selektiv in einen stoßbehafteten oder stoßfreien Übermittlungsmodus umschaltbar. Dabei ist die Signalverarbeitungseinheit im stoßbehafteten Übermittlungsmodus deaktiviert. Innerhalb des industriellen Kommunikationsnetzes erfolgt eine Nachrichtenübermittlung vorzugsweise entsprechend Media Redundancy Protocol, High-availability Seamless Redundancy bzw. entsprechend Parallel Redundancy Protocol. Das industrielle Kommunikationsnetz kann beispielsweise eine Ringtopologie aufweisen, und das Kommunikationsschnittstellenmodul kann eine Überwachungs- und Steuerungseinheit für eine Detektion einer Unterbrechung innerhalb der Ringtopologie umfassen. Die Überwachungs- und Steuerungseinheit ist dabei für eine Detektion einer Unterbrechung innerhalb der Ringtopologie anhand versendeter Test-Nachrichten und für eine Steuerung einer Weiterleitung von Nachrichten mit Nutzdaten, die an die erste oder zweite Sende- und Empfangseinheit gerichtet sind, an die zweite oder erste Sende- und Empfangseinheit ausgestaltet und eingerichtet. Damit wird ein zuverlässiger Betrieb in einem stoßbehafteten Übermittlungsmodus ermöglicht.

Vorteilhafterweise ist die Signalverarbeitungseinheit nur in einem stoßfreien Übermittlungsmodus für eine Vergabe einer Sequenznummer an eine stoßfrei zu übermittelnde Nachricht ausgestaltet und eingerichtet. Dementsprechend ist die Redundanzbehandlungseinheit vorzugsweise nur im stoßfreien Übermittlungsmodus für eine Duplikatefilterung einer stoßfrei übermittelten Nachricht ausgestaltet und eingerichtet. Damit ist sowohl in einem stoßbehafteten Übermittlungsmodus als auch in einem stoßfreien Übermittlungsmodus eine zuverlässige und zu Echtzeitanforderungen konforme Nachrichtenübertragung gewährleistet.

Die vorliegende Erfindung wird nachfolgend an einem Ausführungsbeispiel anhand der Zeichnung näher erläutert. Es zeigt
- Figur 1: eine schematische Darstellung eines modularen Steuerungsgeräts für ein industrielles Automatisierungssystem mit einem erfindungsgemäßen Kommunikationsschnittstellenmodul,
- Figur 2: zwei über ein erstes und ein zweites Teilnetz innerhalb eines industriellen Kommunikationsnetzes miteinander verbundene modulare Steuerungsgeräte,
- Figur 3: zwei miteinander verbundene modulare Steuerungsgeräte mit einem sicherheitsgerichteten Kommunikationsschnittstellensystem.

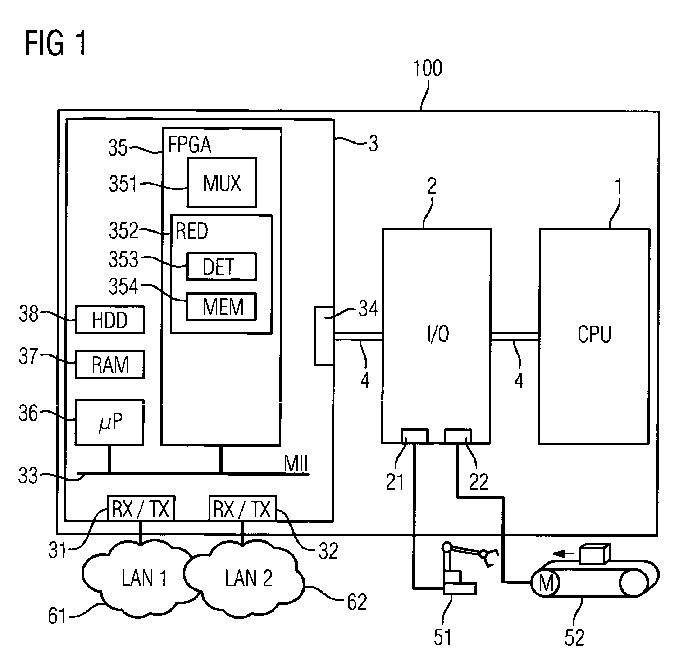

Das in Figur 1 dargestellte modulare Steuerungsgerät 100 umfaßt eine prozessorbasierte Zentraleinheit 1, eine Eingabe-/Ausgabe-Einheit 2 und ein Kommunikationsschnittstellenmodul 3. Diese Module 1-3 sind über ein Rückwandbussystem 4 miteinander verbunden. Die Eingabe-/Ausgabe-Einheit 2 weist mehrere Anschlüsse 21, 22 für eine Feldbus-Kommunikationsverbindung mit durch die modulare Steuerungseinheit 100 gesteuerten bzw. geregelten Automatisierungsgeräten 51, 52 auf. Über die jeweilige Feldbus-Kommunikationsverbindung werden Meß- und Steuerungssignale zur bzw. von der Zentraleinheit 1 übertragen. Die Zentraleinheit 1 berechnet anhand zumindest eines Anwenderprogramms aus durch Sensoren erfaßten Meßsignalen Steuerungssignale für Aktoren in Automatisierungsgeräten 51, 52.

Das Kommunikationsschnittstellenmodul 3 dient zur Ankopplung des modularen Steuerungsgeräts 100 an ein industrielles Kommunikationsnetz, das im vorliegenden Ausführungsbeispiel zwei redundante Teilnetze 61, 62 umfaßt. Über das industrielle Kommunikationsnetz kann das modulare Steuerungsgerät 100 beispielsweise mit einem Leitsystem verbunden werden. Für eine Anbindung des Kommunikationsschnittstellenmoduls 3 an das industrielle Kommunikationsnetz sind eine erste 31 und eine zweite Sende- und Empfangseinheit 32 vorgesehen, die jeweils eine Schnittstelle für eine Netzverbindung eines redundanten Teilnetzes 61, 62 aufweisen. Dabei weisen beide Sende- und Empfangseinheiten 31, 32 eine identische IP- und MAC-Adresse auf. Die beiden Sende- und Empfangseinheiten 31, 32 des Kommunikationsschnittstellenmoduls 3 sind vorzugsweise mittels eines Ethernet-PHY-Halbleiterbauelements realisiert.

Darüber hinaus umfaßt das Kommunikationsschnittstellenmodul 3 einen Anschluß 34 für das Rückwandbussystem 4 des modularen Steuerungsgeräts 100. Über ein MII-Bussystem 33 (Media Independant Interface) entsprechend IEEE 802.3u als Koppelelement sind die beiden Sende- und Empfangseinheiten 31, 32 mit einer Signalverarbeitungseinheit 35 verbunden, die vorzugsweise mittels eines Field Programmable Gate Arrays realisiert ist. Die Signalverarbeitungseinheit 35 kann beispielsweise auch in ein Ethernet-MAC-Halbleiterbauelement integriert sein. Darüber hinaus ist das MII-Bussystem 33 über eine Prozessoreinheit 36 mit dem Anschluß 34 für das Rückwandbussystem 4 verbunden. Die Prozessoreinheit 36 ist für eine Bereitstellung von Kommunikations- bzw. Sicherheitsfunktionen auf Schicht 2 bis 7 entsprechend OSI-Referenzmodell (Open Systems Interconnection) ausgestalt und eingerichtet ist. Vorzugsweise besteht zwischen der Signalverarbeitungseinheit 35 und der Prozessoreinheit 36 eine direkte MII-Bussystemverbindung. Grundsätzlich können die beiden Sende- und Empfangseinheiten 31, 32 über ein erstes MII-Bussystem 33 mit der Signalverarbeitungseinheit 35 verbunden sein, während die Signalverarbeitungseinheit 35 über ein zweites MII-Bussystem mit der Prozessoreinheit 36 verbunden ist, die wiederum eine Schnittstelle zum Rückwandbussystem 4 aufweist.

Die Signalverarbeitungseinheit 35 umfaßt eine Multiplexereinheit 351 zur parallelen Weiterleitung zu sendender Nachrichten an beide Sendeeinheiten 31, 32 und eine Redundanzbehandlungseinheit 352 zur Verarbeitung von beiden Empfangseinheiten 31, 32 empfangener Nachrichten. Die Redundanzbehandlungseinheit 352 weist wiederum eine Filtereinheit 353 auf, die für eine Detektion empfangener redundanter Nachrichten eingerichtet ist. Zusätzlich umfaßt die Redundanzbehandlungseinheit 352 eine Speichereinheit 354, die für eine Speicherung von Sequenznummern bereits fehlerfrei empfangener Nachrichten ausgestaltet und eingerichtet ist. Grundsätzlich sind zueinander redundante Nachrichten bei einer Nachrichtenübermittlung entsprechend High-availability Seamless Redundancy (HSR) und entsprechend Parallel Redundancy Protocol (PRP) durch eine einheitliche Sequenznummer gekennzeichnet. Bei Empfang einer neuen Nachricht überprüft die Redundanzbehandlungseinheit 352 die Sequenznummer der neuen Nachricht auf Übereinstimmung mit einer bereits gespeicherten Sequenznummer. Auf dieser Grundlage können empfangene redundante Nachrichten detektiert werden.

Des weiteren ist durch die Prozessoreinheit 36 eine Protokollumsetzereinheit implementiert, die Nachrichten entsprechend einem Parallel- oder Ringredundanz-Protokoll in Nachrichten entsprechend einem Rückwandbus-Protokoll umwandelt. Im vorliegenden Ausführungsbeispiel ist die Signalverarbeitungseinheit 35 sowohl für eine stoßbehaftete Nachrichtenübermittlung entsprechend einem Medienredundanz-Protokoll als auch für eine stoßfreie Nachrichtenübermittlung entsprechend einem Parallel- oder Ringredundanz-Protokoll ausgestaltet und selektiv in einen stoßbehafteten oder stoßfreien Übermittlungsmodus umschaltbar. Im stoßbehafteten Übermittlungsmodus sind der Multiplexer 351 und die Redundanzbehandlungseinheit 352 deaktiviert. Dementsprechend vergibt die Signalverarbeitungseinheit 35 nur im stoßfreien Übermittlungsmodus Sequenznummern an stoßfrei zu übermittelnde Nachrichten. Insbesondere ist die Redundanzbehandlungseinheit 352 erfolgt nur im stoßfreien Übermittlungsmodus eine Duplikatefilterung. Entsprechend dem vorliegenden Ausführungsbeispiel können Nachrichten innerhalb des industriellen Kommunikationsnetzes mit dem Kommunikationsschnittstellenmodul 3 sowohl entsprechend Media Redundancy Protocol als auch entsprechend High-availability Seamless Redundancy oder entsprechend Parallel Redundancy Protocol übermittelt werden.

Für eine Detektion einer Unterbrechung innerhalb einer Ringtopologie im stoßbehafteten Übermittlungsmodus ist eine durch die Prozessoreinheit 36 implementierte Überwachungs- und Steuerungseinheit 356 vorgesehen, die Test-Nachrichten innerhalb der Ringtopologie versendet und eine Unterbrechung anhand ausbleibender rückgekoppelter Test-Nachrichten erkennt. In Abhängigkeit von einer Unterbrechung innerhalb der Ringtopologie steuert die Überwachungs- und Steuerungseinheit 356 eine Weiterleitung von Nachrichten mit Nutzdaten, die an die erste oder zweite Sende- und Empfangseinheit 31, 32 gerichtet sind, an die zweite 32 oder erste Sende- und Empfangseinheit 31. Somit kann eine Schleifenbildung verhindert bzw. eine Unterbrechung kompensiert werden.

Mittels der Prozessoreinheit 36 kann beispielsweise auch ein Sicherungssystem zur Überwachung eines Nachrichtenverkehrs zwischen den redundanten Teilnetzen 61, 62 einerseits und dem Rückwandbussystem 4 andererseits realisiert werden. Hierfür erforderliche Steuerungsprogramme sind vorzugsweise in einer der Prozessoreinheit 36 zugeordneten nicht-volatilen Speichereinheit 38 gespeichert und können für einen Programmablauf in einen der Prozessoreinheit 36 zugeordneten Arbeitsspeicher 37 geladen werden. In der Speichereinheit 38 sind auch Regeln zur Überwachung des Nachrichtenverkehrs zwischen den redundanten Teilnetzen 61, 62 und dem Rückwandbussystem 4 gespeichert. Diese Regeln können durch einen autorisierten Benutzer geändert werden, beispielsweise unter Nutzung einer an das industrielle Kommunikationsnetz angeschlossenen Bedien- und Beobachtungsstation.

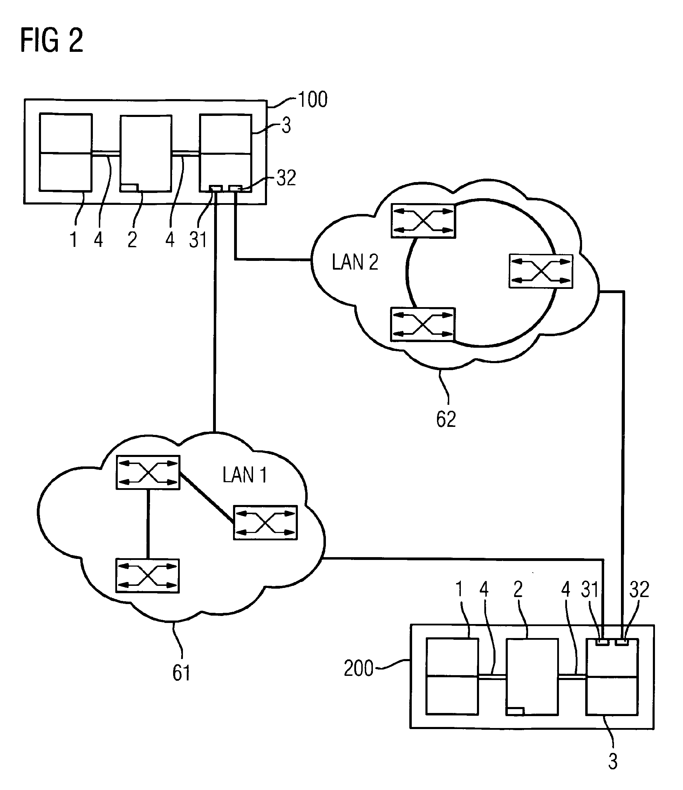

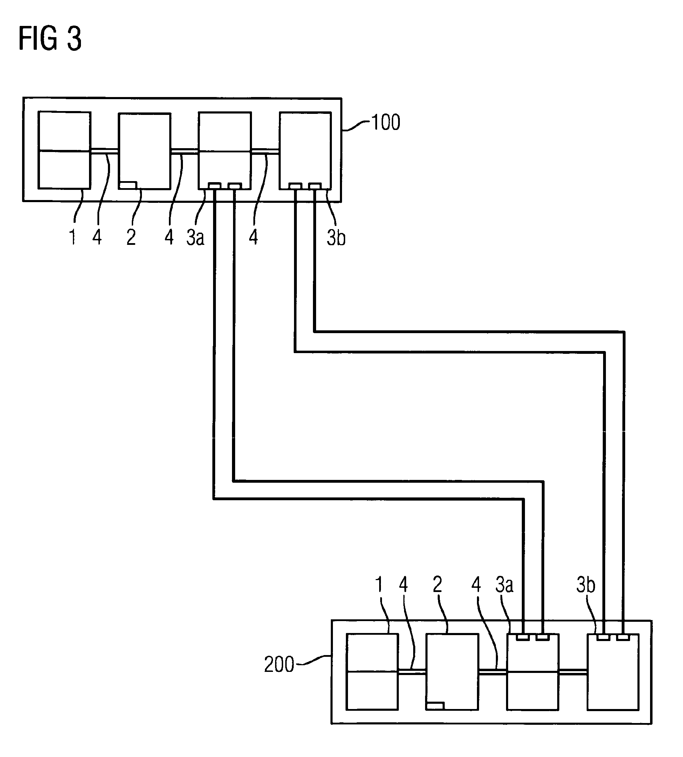

Entsprechend Figur 2 sind zwei modulare Steuerungsgeräte 100, 200 über zwei redundante Teilnetze 61, 62 eines industriellen Kommunikationsnetzes verbunden. Hinsichtlich Aufbau und Funktion entsprechen die beiden modularen Steuerungsgeräte 100, 200 dem in Figur 1 dargestellten modularen Steuerungsgerät 100. Für eine Kopplung der beiden modularen Steuerungsgeräte 100, 200 ist eine Kombination verschiedener Redundanzverfahren möglich. Beispielsweise kann für die Kommunikationsschnittstellenmodule 3 der beiden modularen Steuerungsgeräte 100, 200 das Parallel Redundancy Protocol verwendet werden, während Kommunikationsverbindungen in einem ersten Teilnetz 61 mittels Rapid Spanning Tree Protocol und in einem zweiten Teilnetz mittels High-availability Seamless Redundancy gesichert werden. Darüber hinaus können die beiden modularen Steuerungsgeräte 100, 200 zur Bildung eines sicherheitsgerichteten Kommunikationsschnittstellensystems entsprechend dem in Figur 3 dargestellten Ausführungsbeispiel jeweils zwei im wesentlichen identische Kommunikationsschnittstellenmodule 3a, 3b umfassen, die mit einem jeweiligen Rückwandbussystem 4 verbunden sind. Somit ist ein Nachrichtenaustausch zwischen beiden modularen Steuerungsgeräten 100, 200 durch ein doppelt redundantes Kommunikationssystem gesichert, das auch einen Ausfall eines Kommunikationsschnittstellenmoduls 3a, 3b kompensieren kann.

## Patentansprüche

1. Kommunikationsschnittstellenmodul für ein modulares Steuerungsgerät eines industriellen Automatisierungssystems mit
- einem Anschluß für ein Rückwandbussystem des modularen Steuerungsgeräts, wobei das Kommunikationsschnittstellenmodul über das Rückwandbussystem mit einer Zentraleinheit des modularen Steuerungsgeräts verbindbar ist,
- zumindest einer ersten und einer zweiten Sende- und Empfangseinheit, die jeweils eine Schnittstelle für eine Netzverbindung eines redundanten Teilnetzes aufweisen,
- einem mit der ersten und zweiten Sende- und Empfangseinheit verbundenen Koppelelement, über das der Anschluß für das Rückwandbussystem mit der ersten und zweiten Sende- und Empfangseinheit verbindbar ist,
- einer mit dem Koppelelement verbundenen Signalverarbeitungseinheit, die eine Multiplexereinheit zur parallelen Weiterleitung zu sendender Nachrichten an beide Sendeeinheiten und eine Redundanzbehandlungseinheit zur Verarbeitung von beiden Empfangseinheiten empfangener Nachrichten aufweist, wobei die Redundanzbehandlungseinheit eine Filtereinheit umfaßt, die für eine Detektion empfangener redundanter Nachrichten eingerichtet ist,
**dadurch gekennzeichnet, dass**
- beide Sende- und Empfangseinheiten eine identische Netzadresse und einen identischen Geräteidentifikator aufweisen,
- die Signalverarbeitungseinheit für eine stoßbehaftete Nachrichtenübermittlung entsprechend einem Medienredundanz-Protokoll und für eine stoßfreie Nachrichtenübermittlung entsprechend einem Parallel- oder Ringredundanz-Protokoll innerhalb eines industriellen Kommunikationsnetzes ausgestaltet und selektiv in einen stoßbehafteten oder stoßfreien Übermittlungsmodus umschaltbar ist, und bei dem die Signalverarbeitungseinheit im stoßbehafteten Übermittlungsmodus deaktiviert ist,
- die Signalverarbeitungseinheit nur im stoßfreien Übermittlungsmodus für eine Vergabe einer Sequenznummer an eine stoßfrei zu übermittelnde Nachricht ausgestaltet und eingerichtet ist, und bei dem die Redundanzbehandlungseinheit nur im stoßfreien Übermittlungsmodus für eine Duplikatefilterung einer stoßfrei übermittelten Nachricht ausgestaltet und eingerichtet ist.

2. Kommunikationsschnittstellenmodul nach Anspruch 1,
bei der das Kommunikationsschnittstellenmodul über das Rückwandbussystem zur Bildung eines sicherheitsgerichteten Kommunikationsschnittstellensystems mit einem im wesentlichen identischen Kommunikationsschnittstellenmoduls verbunden ist.

3. Kommunikationsschnittstellenmodul nach einem der Ansprüche 1 oder 2,
bei dem das Koppelelement und die Signalverarbeitungseinheit mit einer Prozessoreinheit verbunden sind, die für eine Bereitstellung von Kommunikations- und/oder Sicherheitsfunktionen auf Schicht 2 bis 7 entsprechend OSI-Referenzmodell (Open Systems Interconnection) ausgestalt und eingerichtet ist.

4. Kommunikationsschnittstellenmodul nach Anspruch 3,
bei dem das Koppelelement ein MII-Bussystem (Media Independant Interface) entsprechend IEEE 802.3u umfaßt, und bei dem der Anschluß für das Rückwandbussystem über die Prozessoreinheit mit dem Koppelelement verbunden ist.

5. Kommunikationsschnittstellenmodul nach Anspruch 4,
bei dem mittels der Prozessoreinheit ein Sicherungssystem zur Überwachung eines Nachrichtenverkehrs zwischen den redundanten Teilnetzen einerseits und dem Rückwandbussystem andererseits realisiert ist.

6. Kommunikationsschnittstellenmodul nach Anspruch 5,
bei dem in einer der Prozessoreinheit zugeordneten Speichereinheit Regeln zur Überwachung des Nachrichtenverkehrs zwischen den redundanten Teilnetzen und dem Rückwandbussystem gespeichert sind, und bei dem die Regeln durch einen autorisierten Benutzer änderbar sind.

7. Kommunikationsschnittstellenmodul nach einem der Ansprüche 4 bis 6,
bei dem durch die Prozessoreinheit eine Protokollumsetzereinheit gebildet ist, die zur Umwandlung von Nachrichten entsprechend einem Parallel- oder Ringredundanz-Protokoll in Nachrichten entsprechend einem Rückwandbus-Protokoll ausgestaltet und eingerichtet ist.

8. Kommunikationsschnittstellenmodul nach einem der Ansprüche 1 bis 7,
bei dem zueinander redundante Nachrichten durch eine einheitliche Sequenznummer gekennzeichnet sind, und bei dem der Signalverarbeitungseinheit eine Speichereinheit zugeordnet ist, die für eine Speicherung von Sequenznummern bereits fehlerfrei empfangener Nachrichten ausgestaltet und eingerichtet ist, und bei dem die Redundanzbehandlungseinheit für eine Überprüfung auf eine bereits gespeicherte Sequenznummer bei Empfang einer neuen Nachricht ausgestaltet und eingerichtet ist.

9. Kommunikationsschnittstellenmodul nach einem der Ansprüche 1 bis 8,
bei dem das industrielle Kommunikationsnetz eine Ringtopologie aufweist, und bei dem eine Überwachungs- und Steuerungseinheit vorgesehen ist, die für eine Detektion einer Unterbrechung innerhalb der Ringtopologie anhand versendeter Test-Nachrichten und für eine Steuerung einer Weiterleitung von Nachrichten mit Nutzdaten, die an die erste oder zweite Sende- und Empfangseinheit gerichtet sind, an die zweite oder erste Sende- und Empfangseinheit ausgestaltet und eingerichtet ist.

10. Kommunikationsschnittstellenmodul nach einem der Ansprüche 1 bis 9,
bei dem eine Nachrichtenübermittlung innerhalb des industriellen Kommunikationsnetzes entsprechend Media Redundancy Protocol, High-availability Seamless Redundancy und/oder entsprechend Parallel Redundancy Protocol erfolgt.

11. Kommunikationsschnittstellenmodul nach einem der Ansprüche 1 bis 10,
bei dem die erste und die zweite Sende- und Empfangseinheit mittels eines Ethernet-PHY-Halbleiterbauelements realisiert sind.

12. Kommunikationsschnittstellenmodul nach einem der Ansprüche 1 bis 11,
bei dem die Signalverarbeitungseinheit mittels eines Field Programmable Gate Arrays realisiert ist.

13. Kommunikationsschnittstellenmodul nach einem der Ansprüche 1 bis 12,
bei dem die Signalverarbeitungseinheit in ein Ethernet-MAC-Halbleiterbauelement integriert ist.

## Claims

1. Communication interface module for a modular control device of an industrial automation system, having
- a connection for a backplane bus system of the modular control device, the communication interface module being able to be connected to a central unit of the modular control device via the backplane bus system,
- at least one first and one second transmitting and receiving unit each having an interface for a network connection of a redundant subnetwork,
- a coupling element which is connected to the first and second transmitting and receiving units and can be used to connect the connection for the backplane bus system to the first and second transmitting and receiving units,
- a signal processing unit which is connected to the coupling element and has a multiplexer unit for forwarding messages to be transmitted to both transmitting units in a parallel manner and a redundancy handling unit for processing messages received by both receiving units, the redundancy handling unit comprising a filter unit which is set up to detect received redundant messages,
**characterized in that**
- both transmitting and receiving units have an identical network address and an identical device identifier,
- the signal processing unit is configured for bursty message transmission according to a media redundancy protocol and for smooth message transmission according to a parallel or ring redundancy protocol inside an industrial communication network and can be selectively changed over to a bursty or smooth transmission mode, and the signal processing unit is deactivated in the bursty transmission mode,
- the signal processing unit is configured and set up to allocate a sequence number to a message to be smoothly transmitted only in the smooth transmission mode, and the redundancy handling unit is configured and set up for duplicate filtering of a message transmitted smoothly only in the smooth transmission mode.

2. Communication interface module according to Claim 1,
in which the communication interface module is connected to a substantially identical communication interface module via the backplane bus system in order to form a security-oriented communication interface system.

3. Communication interface module according to either of Claims 1 and 2,
in which the coupling element and the signal processing unit are connected to a processor unit which is configured and set up to provide communication and/or security functions on layers 2 to 7 corresponding to the OSI (Open Systems Interconnection) reference model.

4. Communication interface module according to Claim 3,
in which the coupling element comprises an MII (Media Independent Interface) bus system corresponding to IEEE 802.3u, and in which the connection for the backplane bus system is connected to the coupling element via the processor unit.

5. Communication interface module according to Claim 4,
in which the processor unit is used to implement a security system for monitoring message traffic between the redundant subnetworks, on the one hand, and the backplane bus system, on the other hand.

6. Communication interface module according to Claim 5,
in which rules for monitoring the message traffic between the redundant subnetworks and the backplane bus system are stored in a memory unit assigned to the processor unit, and in which the rules can be changed by an authorized user.

7. Communication interface module according to one of Claims 4 to 6,
in which a protocol converter unit is formed by the processor unit and is configured and set up to convert messages corresponding to a parallel or ring redundancy protocol into messages corresponding to a backplane bus protocol.

8. Communication interface module according to one of Claims 1 to 7,
in which mutually redundant messages are identified by a consistent sequence number, and in which a memory unit is assigned to the signal processing unit and is configured and set up to store sequence numbers of messages which have already been received without errors, and in which the redundancy handling unit is configured and set up to check for a sequence number which has already been stored upon receiving a new message.

9. Communication interface module according to one of Claims 1 to 8,
in which the industrial communication network has a ring topology, and in which a monitoring and control unit is provided and is configured and set up to detect an interruption inside the ring topology using transmitted test messages and to control forwarding of messages containing useful data, which are addressed to the first or second transmitting and receiving unit, to the second or first transmitting and receiving unit.

10. Communication interface module according to one of Claims 1 to 9,
in which messages are transmitted inside the industrial communication network according to the media redundancy protocol, high-availability seamless redundancy and/or parallel redundancy protocol.

11. Communication interface module according to one of Claims 1 to 10,
in which the first and second transmitting and receiving units are implemented using an Ethernet PHY semiconductor component.

12. Communication interface module according to one of Claims 1 to 11,
in which the signal processing unit is implemented using a field programmable gate array.

13. Communication interface module according to one of Claims 1 to 12,
in which the signal processing unit is integrated in an Ethernet MAC semiconductor component.

## Revendications

1. Module d'interface de communication pour un appareil de commande modulaire d'un système d'automatisation industriel comprenant
- un accès pour un système de bus à panneau arrière de l'appareil de commande modulaire, le module d'interface de communication pouvant être relié à une unité centrale de l'appareil de commande modulaire par le système de bus à panneau arrière,
- au moins une première et une deuxième unités d'émission et de réception, qui ont respectivement une interface pour une liaison d'un réseau partiel redondant,
- un élément de couplage, qui est relié à la première et à la deuxième unités d'émission et de réception et par lequel l'accès pour le système de bus à panneau arrière peut être relié à la première et la deuxième unités d'émission et de réception,
- une unité de traitement du signal, qui est reliée à l'élément de couplage et qui a une unité de multiplexage pour l'acheminement en parallèle de messages à envoyer au deux unités d'émission et une unité de traitement de redondance pour le traitement de messages reçus par les deux unités de réception, l'unité de traitement de redondance comprenant une unité de filtrage, qui est conçue pour détecter des messages redondants reçus,
- **caractérisé en ce que**
- les deux unités d'émission et de réception ont la même adresse de réseau et le même identificateur d'appareil,
- l'unité du traitement du signal est constituée pour une transmission de messages avec à-coups, correspondant à un protocole redondance support, et pour une transmission de messages sans à-coup, correspondant à un protocole de redondance parallèle ou annulaire, au sein d'un réseau de communication industriel et pour pouvoir être commutée sélectivement dans un mode de transmission avec à-coups ou sans à-coup et dans lequel l'unité de traitement du signal est désactivée dans le mode de transmission avec à-coup,
- l'unité de traitement du signal est, seulement dans le mode de transmission sans à-coup, conformée et conçue pour donner un numéro de séquence à un message à transmettre sans à-coup et dans lequel l'unité de traitement de redondance est, seulement dans le mode de transmission sans à-coup, conformée et conçue pour un filtrage dupliqué d'un message transmis sans à-coup.

2. Module d'interface de communication suivant la revendication 1,
dans lequel le module d'interface de communication est, par le système de bus à panneau arrière, relié, pour la formation d'un système d'interface de communication sécurisée, à sensiblement le même module d'interface de communication.

3. Module d'interface de communication suivant la revendication 1 ou 2,
dans lequel l'élément de couplage et l'unité de traitement du signal sont reliés à une unité de processeur, qui est conformée et conçue pour mettre à disposition des fonctions de communication et/ou de sécurisation sur la couche 2 à 7, conformément au modèle de référence OSI (Open Systems Interconnection).

4. Module d'interface de communication suivant la revendication 3,
dans lequel l'élément de couplage comprend un système de bus MII (Media Indépendant Interface) correspondant à IEEE 802.3u et dans lequel l'accès pour le système de bus à panneau arrière est relié à l'élément couplage par l'unité de processeur.

5. Module d'interface de communication suivant la revendication 4,
dans lequel il est réalisé au moyen de l'unité de processeur un système de sécurisation pour le contrôle d'une circulation de messages entre les réseaux partiels redondants, d'une part, et le système de bus à panneau arrière, d'autre part.

6. Module d'interface de communication suivant la revendication 5,
dans lequel il est mémorisé, dans une unité de mémorisation affectée à l'unité de processeur, des règles de contrôle de la circulation des messages entre les réseaux partiels redondants et le système de bus à panneau arrière et dans lequel les règles peuvent être modifiées par un utilisateur autorisé.

7. Module d'interface de communication suivant l'une des revendications 4 à 6,
dans lequel il est formé par l'unité de processeur une unité de conversion de protocole qui est conformée et conçue pour transformer des messages conformément à un protocole de redondance parallèle ou annulaire en des messages correspondant à un protocole de bus à panneau arrière.

8. Module d'interface de communication suivant l'une des revendications 1 à 7,
dans lequel des messages redondants entre eux sont **caractérisés par** un numéro de séquence unitaire et dans lequel il est associé à l'unité de traitement du signal une unité de mémorisation, qui est conformée et conçue pour mémoriser des numéros de séquence de messages déjà reçus sans erreur, et dans lequel l'unité de traitement de redondance est conformée et conçue pour un contrôle d'un numéro de séquence déjà mémorisé à la réception d'un message nouveau.

9. Module d'interface de communication suivant l'une des revendications 1 à 9,
dans lequel le réseau de communication industriel a une topologie annulaire et dans lequel il est prévu une unité de contrôle et de commande, qui est conformée et conçue pour la détection d'une interruption au sein de la topologie annulaire à l'aide de messages de tests envoyés et pour une commande d'un acheminement de messages ayant des données utiles, qui sont dirigés sur la première ou la deuxième unité d'émission et de réception, à la deuxième ou à la première unité d'émission et de réception.

10. Module d'interface de communication suivant l'une des revendications 1 à 9,
dans lequel il s'effectue une transmission de messages au sein du réseau de communication industriel conformément à média redundancy protocol, high-availability seamless redundancy et/ou conformément à parallel redundancy protocol.

11. Module d'interface de communication suivant l'une des revendications 1 à 10,
dans lequel la première et la deuxième unités d'émission et de réception sont réalisées au moyen d'un composant à semi-conducteur éthernet-PHY.

12. Module d'interface de communication suivant l'une des revendications 1 à 11,
dans lequel l'unité de traitement du signal est réalisée au moyen d'un field programmable gate arrays.

13. Module d'interface de communication suivant l'une des revendications 1 à 12,
dans lequel l'unité de traitement du signal est intégrée dans un composant à semi-conducteur éthernet-MAC.
